# EUROPEAN PATENT APPLICATION

(11) **EP 1 565 006 A2**
(43) Date of publication of application: **17.08.2005**
(21) Application number: 05250800.9
(22) Date of filing: 11.02.2005
(51) Int. Cl.: H04N 9/31

(54) **High performance projection system with two reflective liquid crystal display panels**

(30) Priority: 13.02.2004 GB 0403263
(71) Applicant: VARINTELLIGENT (BVI) LIMITED, Tortola, British Virgin Islands (VG); Johnson, Terence Leslie, London EC4A 1BZ (GB)
(72) Inventor: Yeung, Steve, Tseung Kwan O, Hong Kong (CN); Hong , Ng Pak, Tseung Kwan O, Hong Kong (CN)
(74) Representative: Johnson, Terence Leslie

(57) **Abstract**

There is disclosed a two-panel projection system.

The projection system comprising a dichroic filtering device (204), optically between a polarizing beam splitter (203) adapted to split light from a light source (201) into light beams of desired polarisation, and a plurality of reflective display devices (205,206) adapted to receive a respective light beam from the dichroic filtering device (204) and direct it back thereto to provide a combined light beam which is re-incident on the polarizing beam splitter (203) whereby to seek to obviate undesired polarized light being projected. A broadband light source provides a light with a spectrum divisible into multiple color components, namely three primary color components: red, green and blue.

## Description

The present invention relates to an image projection engine with two reflective liquid crystal display panels for use in a projection system.

The most cost effective large screen flat panel display is a high definition television (HDTV) capable of being a projection type display including a front projector and a rear projection television (RPTV). Several technologies are being developed for such projection type display. Examples are transmissive High Temperature Polysilicon (HTPS) technology, Texas Instruments' DLP technology, and liquid crystal on silicon technology. Among these three technologies, liquid crystal on silicon technology is expected to be the most inexpensive and capable of achieving the best picture quality. But as liquid crystal on silicon display is a reflective device and requires polarization modulation, the design of the optical engine is the most complicated one of the three. Some developed engine designs are three-panel and single-panel type. Three-panel engines have the largest number of panels and other optical components which means the highest component cost and engine assembly cost. Single-panel engine designs lower the cost, but not very significantly. The reason is that in order to reproduce a full color image, a single-panel engine has to adopt a sequential-color scheme or a scrolling-color scheme. The single display panel has to display the image of each primary color at a frame rate of at least three-fold that of a three-panel engine. This requires the display panel be able to support this high speed. A response time of the liquid crystal mode must be very small. An extra external storage memory on a driving circuit is also required. Moreover, the active area of the display panel is also larger than that of a three-panel engine one for sufficient brightness. All these factors increase the engine cost. One-panel engines usually suffer visual artefacts such as a color-breakup problem, which can be reduced by further increasing the frame rate but this leads to higher difficulties on panel backplane design and engine design, which also increases cost. A compromise between cost and performance is a two-panel engine design. The simplicity of a two-panel engine can be very close to a singe-panel engine that means the engine cost can also be close to a single-panel engine but visual artefacts can be reduced by a significant amount.

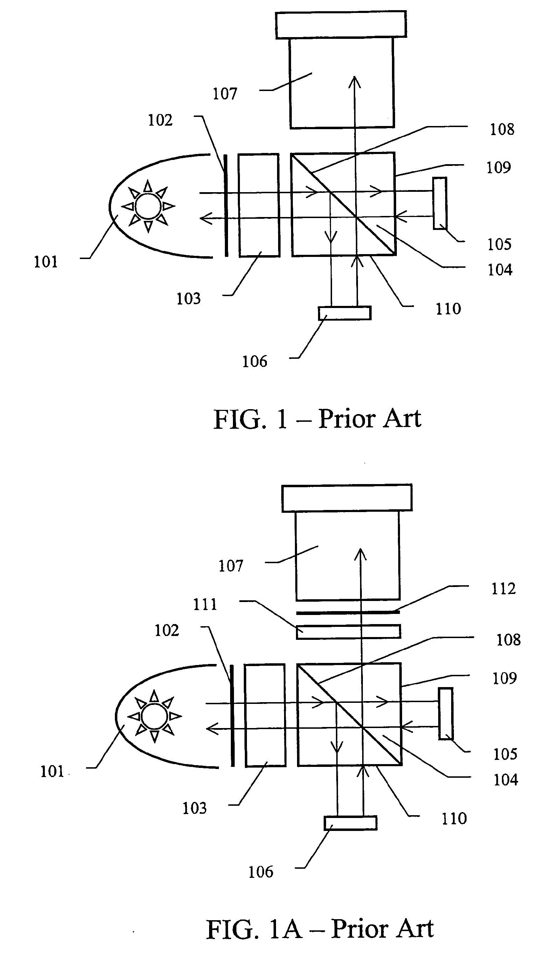

FIG. 1 shows a simplified two-panel engine design of a prior art apparatus which comprises a white light source **101** including three primary color light (red, green and blue), a pre-polarizer **102,** an electrically controlled selective polarization rotation filter **103,** a cubic polarizing beam splitter (PBS) **104,** a first reflective display panel **105,** a second reflective display panel **106** and a projection lens **107.** The pre-polarizer **102** polarized the white light from the light source **101** to a predetermined polarization, in this example, P-polarization, in which the green and blue primary color light is time-sequentially transmitted to the PBS **104** with polarization rotated to S-polarization while the remaining spectrum, red primary color light, is continuously transmitted to the PBS without change in polarization. The cubic polarizing beam splitter (PBS) **104** which is generally a MacNeille type including a polarizing beam splitting and combining surface **108** separates the incoming light into two light beams by transmitting the P-polarized red color light to a first reflective display panel **105** and reflecting the S-polarized green and blue color light to a second display panel **106,** where the two reflective display panels are disposed adjacent to two exit surfaces of the PBS **109, 110**. After modulating the polarization of the two light beams by the display panels **105, 106,** the two reflected light beams are now polarized at different polarization states determined by image data and are then analysed by the PBS **104**.

As there is always a transmission of S-polarized light, Ts (%), and a reflection of P-polarized light, Rp (%), by surface **108** which are considered as light leakage, contrast is reduced as Rp is typically large, around 5% to 10%, while Ts is around 1% to 2%. Consider displaying a dark image, most of the red P-polarized light from the electrically controlled selective polarization rotation filter **103** transmits through surface **108** reaching the first display panel **105** and is reflected to the PBS **104** without change in polarization, in which a portion Rp is reflected by surface **108** to the projection lens **107.** For the remaining portion of the red P-polarized light from the electrically controlled polarization rotation filter **103** reflected by surface **108** to the second panel **106** is reflected back to the PBS **104** without change of polarization and is transmitted through surface **108** to the projection lens **107.** Both portions of light reaching the projection lens **107** due to significantly large Rp comprise leakage light, which raises the dark level and as a result reduces the contrast ratio. This is a result of illuminating the PBS **104** by a light beam with two orthogonal polarizations and combining two light beams from the two display panels **105, 106** by the single PBS **104.**

One method suggested by another embodiment of a prior art is shown in FIG. 1A where an additional passive selective polarization rotation filter **111** and a clean-up polarizer **112** are disposed between the PBS **104** and the projection lens **107.** The selective polarization rotation filter **111** selectively rotates the polarization of the red P-polarized leakage light by 90° such that it is S-polarized and to be filtered out by the clean-up polarizer **112** disposed between the selective polarization rotation filter **111** and the projection lens **107.** Although this arrangement can eliminate most of the aforesaid leakage light, there are also shortcomings. Firstly, the spectral properties of the selective polarization rotation filter **111** has to be designed very accurately in order that only the light of the spectral range of concern is given the precise retardation and not to cause brightness loss due to rotating the polarization of P-polarized light of the complementary spectrum that is intended for image projection by the projection lens **107.** Secondly, the remedy is effective only if the selective polarization rotation filter **111** is reproduced or manufactured as designed. Thirdly, thermal, alignment or other environmental effects on the selective polarization rotation filter **112** may degrade image quality such as uniformity.

In the described prior art, the PBS is limited to certain types such as MacNeille type, as the two optical paths of the light beams separated by the surface **108** of the PBS **104** have to be equal and homogeneous. Some emerging types of high contrast PBS such as Moxtek's ProFlux™ polarizer and 3M Vikuiti™ PBS will not be applicable to the prior art as those types of PBS only provide one passage of light, either reflection or transmission, for image formation due to the reason that the other passage may cause distortion on the image.

Considering color quality of a projected image, the color gamut that a projection system can provide depends on the spectrum of each primary color light. Most of the conventional projection systems including three-panel systems, some one-panel and two-panel systems simply divide the spectrum of a broadband white light from the light source into three complementary components such that the full spectrum of the light source can be utilized for higher brightness, but color purity is sacrificed. e.g. green color light is yellowish-green and red color light appears orange. In order to obtain a better color gamut such that the primary colors are close to color standards such as NTSC, additional color filters are required to filter out certain spectral regions of a broadband white light such as cyan and yellow light for those systems. Another problem on color is the spectra of projection light sources such as UHP™ lamp are usually deficient in red region which causes the projected image to be dimmer in red color compared to other colors in conventional engine designs.

Accordingly, it is an object of the present invention to seek to mitigate the above-identified disadvantage.

According to the invention there is provided a projection system comprising a dichroic filtering device, optically between a polarizing beam splitter adapted to split light from a light source into light beams of desired polarisation, and a plurality of reflective display devices adapted to receive a respective light beam from the dichroic filtering device and direct it back thereto to provide a combined light beam which is re-incident on the polarizing beam splitter whereby to seek to obviate undesired polarized light being projected.

In a preferred embodiment there may be a broadband light source which provides a light with a spectrum divisible into multiple color components, namely three primary color components: red, green and blue;
a multiple-color selection device adapted to provide a polarized light which is time-sequentially separated into a plurality of portions of light or spatially separated into a plurality of portions of scrolling-color light with different spectra propagating at the same direction;
a polarizing beam splitter (PBS) disposed adjacent to said multiple-color selection device adapted to receive a uniquely polarized light from said multiple-color selection device;
a dichroic filtering device adapted to separate the light from said PBS into a first and a second light beam propagating at different directions where the first light beam includes light with spectrum including part of the spectrum of each of said portions of light from the multiple-color selection device and the second light beam includes light with spectrum including part of the spectrum of each of said portions of light which differs from the spectrum of the first light beam;
a first reflective liquid crystal display panel adapted to receive the first light beam from the dichroic filtering device for polarization modulation and directs it back to the dichroic filtering device;
a second reflective liquid crystal display panel adapted to receive the second light beam from the dichroic filtering device for polarization modulation and directs it back to the dichroic filtering device;
a projection lens disposed adjacent to the PBS adapted to receive light from the polarizing beam splitter for image projection;
an optional clean-up polarizer disposed between the PBS and the projection lens.

Using the invention, the following benefits can be obtained. Firstly, at the illumination stage, only one predetermined polarization of light is incident on the PBS, and the return light beam is also a single light beam which is combined from the two light beams reflected from the display devices in the form of panels by the dichroic filtering device. In the case of a MacNeille type PBS, the aforesaid leakage light due to transmission of S-polarized light and mainly reflection of P-polarized light are prevented from entering the projection lens such that high contrast ratio can be achieved while the whole projection system design is kept simple. Secondly, the spectra of the primary color light can be tailored without additional color filters for spectral trimming and one or more primary color light can be enhanced by doubly illuminating on one of the display panels compared to the other primary color light. Thirdly, multiple primary color projection can also be achieved without additional optical components.

### BRIEF DESCRIPTION OF THE DRAWINGS

FIG. 1 illustrates a schematic of a conventional projection display system with two reflective display panels.
FIG. 1A illustrates a schematic of another conventional projection display system with two reflective display panels.
FIG. 2 illustrates the first preferred embodiment of a projection display system with two reflective display panels according to the present invention.
FIG. 3 illustrates the second preferred embodiment of a projection display system with two reflective display panels according to the present invention.
FIG. 4 illustrates the third preferred embodiment of a projection display system with two reflective display panels according to the present invention.
FIG. 5 illustrates the fourth preferred embodiment of a projection display system with two reflective display panels according to the present invention.
FIG. 6 illustrates the fifth preferred embodiment of a projection display system with two reflective display panels according to the present invention.

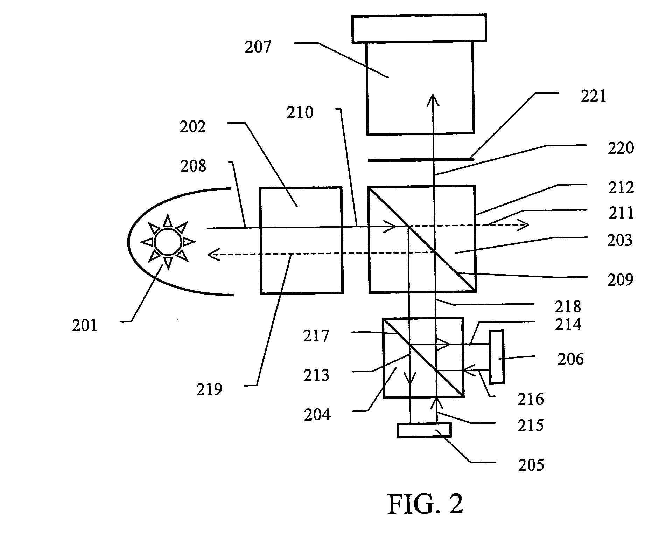

Referring to the drawing, FIG. 2 illustrates a first preferred embodiment of a full color two-panel projection system embodying the present invention. The projection system includes a light source **201,** a two-color-selection device **202,** a polarizing beam splitter (PBS) **203,** a dichroic filtering device **204** and two reflective liquid crystal displays **205, 206** and a projection lens **207.**

The light source **201,** a projection lamp emits a white light **208,** which is divisible into three color components: the red, green and blue primary color light. The white light **208** is incident on the two-color selection device **202,** which can be in one case a sequential-color type such as a rotatable color wheel or an electrically controlled shutter type color switching filter such as commercially available ColorLink's ColorSwitch™, or in another case a scrolling-color type system such as rotating prism, rotatable color drum or a rotatable spiral color wheel. Particularly, a sequential-color type is more suitable for frame-refresh type display panels, while a scrolling-color type is more suitable for progressive scan type display panels. Here the two-color selection device **202** is in general embedded in an integration optics, which is not shown in the drawing, and provides a homogenous, uniform and rectangular-shape cross-section light beam incident on the display panels. Within the light path between the light source and the two-color selection device or the integration optics, a pre-polarizer, which is not shown in the drawing, is included such that the output light from the two-color selection device 202 is polarized in a predetermined polarization, in this embodiment, S-polarization.

The two-color selection device **202** is to provide a light beam, which is separated into two time-sequential or color-scrolling portions of light with different spectra. Each portion includes two primary color components. In the case of sequential-color type, as an example, a color wheel includes two types of color filtering segment, one transmits yellow light (red and green) while the other one transmits magenta light (red and blue). Similarly, in the case of scrolling-color type, the two-color selection device **202** is to provide two continually raster scanning stripes of color light, one is yellow (red and green) while the other is magenta (red and blue), imaged at the plane where the display areas of the two reflective display panels **205, 206** positioned.

The polarizing beam splitter **203,** typically a broadband PBS such as a MacNeille type PBS in this preferred embodiment, includes a polarizing surface **209** which reflects most of the S-polarized light and transmits most of the P-polarized light. The PBS **203** accepts the S-polarized light **210** from the two-color selection device **202** and reflects most of it to the dichroic filtering device **204** adjacent to it. The remaining S-polarized light **211** is transmitted through the polarizing surface **209** to an exit surface **212** of the PBS **203** and which cannot reach any of the display panels **205, 206** and the projection lens such that it will not cause any light leakage to the projected image.

The dichroic filtering device **204** should have as least one optical surface for color separation. In this preferred embodiment, a cubic dichroic beam splitter is preferred for its shorter optical path than that of a dichroic mirror plate. The dichroic beam splitter **204** selectively transmits (or reflects) red light **213** to the first reflective display panel **205** and selectively reflecting (or transmitting) the cyan light **214** (green and blue) to the second reflective display panel **206.**

The first reflective liquid crystal display panel **205** reflects the red light **215** with polarization modulated according to the red image information received and the second reflective liquid crystal display panel **206** reflects the green/blue light **216** with polarization modulated according to image information of the corresponding primary color received. As a result, the two light beams **215, 216** reflected by the two display panels **205, 206** are now including a plurality of polarization states.

The reflected red light **215** and green/blue light **216** follows the reverse paths and enter the dichroic beam splitter **204.** The red light **215** is transmitted (or reflected) through the dichroic surface **217** and the green/blue light **216** is reflected (or transmitted) by the dichroic surface **217** such that they are combined into a single light beam **218** and incident to the PBS **203.** One requirement on the dichroic filtering device **204** is that it should be designed to meet the spectral requirement for both S- and P-polarized light.

In this reverse path, the PBS **203** acts as an analyser, for most of the S-polarized light **219** coming from the dichroic beam splitter **204** is reflected to the light source direction while most of the P-polarized light **220** is transmitted through the PBS **203** to a projection lens **207** for image projection. A little amount of un-reflected S-polarized light is transmitted through polarizing surface **209** will be filtered out if a clean-up polarizer **221** is disposed between the PBS **203** and the projection lens **207** such that the S-polarized light cannot enter the projection lens **207** to cause light leakage. For certain types of PBS, Ts is too small that such clean-up polarizer **221** is not required. The un-transmitted P-polarized light is reflected by the polarizing surface **209** to the light source direction which will also not to cause any light leakage.

In the embodiment of Fig. 2 , one of the primary color light, the red one, illuminates on the first display panel **205** twice to that of the other two primary color light, green and blue, illuminating on the second display panel **206.** This effectively enhances the red color on the projected image for optimal color balance as there is usually a deficiency in the red light from the light source **201.**

As the two portions of light provided by the two-color selection device **202** are spectrally independent of each other, their spectra can be optimised for color purity. By designing the spectral properties of the two-color selection device **202,** a certain spectral region of light from the light source will be in one case filtered out or in another case be enhanced in the projected image. The spectrum of the first portion of light including the red and green primary color light has a cut-off wavelength, λ₁, at around the wavelength of cyan color while the spectrum of the other portion of light including the red and blue primary color light also has a cut-off wavelength, λ₂, at around the wavelength of cyan color. If λ₁ > λ₂, the spectral region between λ₁ and λ₂ is filtered out such that it cannot be transmitted to the PBS **203.** On the other hand, if λ₁ < λ₂, both green and blue primary color light includes the spectral region between λ₁ and λ₂ such that this spectral region is enhanced on the projected image.

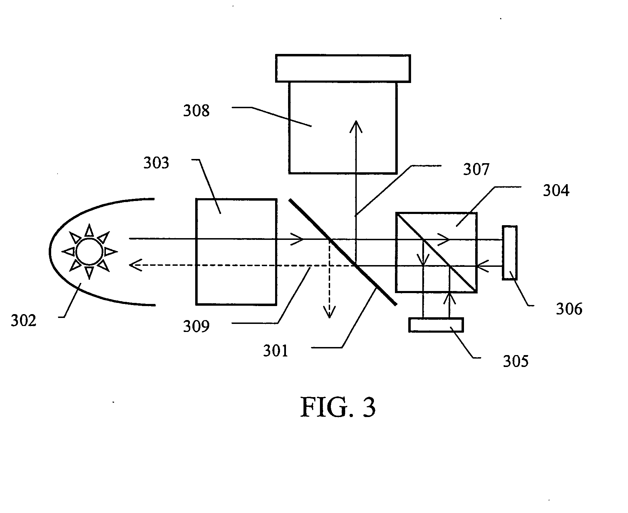

Various types of polarizing beam splitter are possible to be implemented in the present invention. FIG. 3 illustrates a second preferred embodiment of the present invention using a high contrast micro-wire grid PBS plate **301** such as commercially available Moxtek's ProFlux™ polarizer. As an image transmitted through a micro-wire grid PBS may be distorted, image formation is by reflection of S-polarized light rather than transmission of P-polarized light. The light from light source **302** passes through the two-color selection device **303** is P-polarized and transmitted through the micro-wire grid PBS **301** to the dichroic beam splitter **304.** In the reverse path, the polarization modulated light beams from the two display panels **305, 306** are combined by the dichroic beam splitter **304** into a single light beam, which is then analysed by the micro-wire grid PBS **301** such that S-polarized light **307** is reflected to a projection lens **308** for image projection while P-polarized light **309** is transmitted to the light source direction.

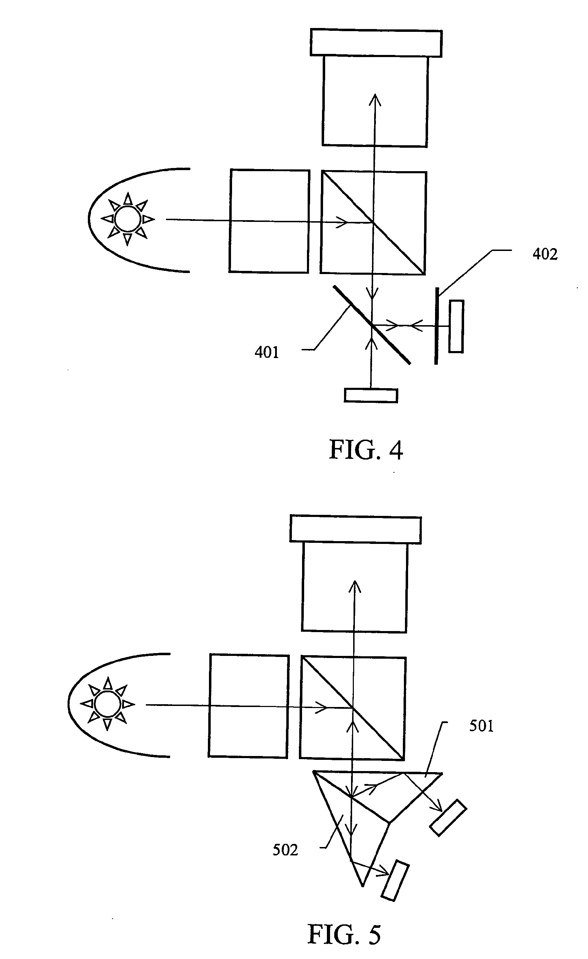

Various types of dichroic filtering device are possible to be applied to the present invention. FIG. 4 and FIG. 5 illustrate respectively a third and a fourth preferred embodiment of the present invention, respectively. They are also similar in all parts as the first preferred embodiment except the dichroic beam splitting device is replaced, in the third preferred embodiment (Fig. 4), by a lower cost dichroic mirror plate **401** where a glass plate **402** is required for optical path compensation, or in the fourth preferred embodiment (Fig. 5), replaced by total internal reflection (TIR) prisms **501** and **502.**

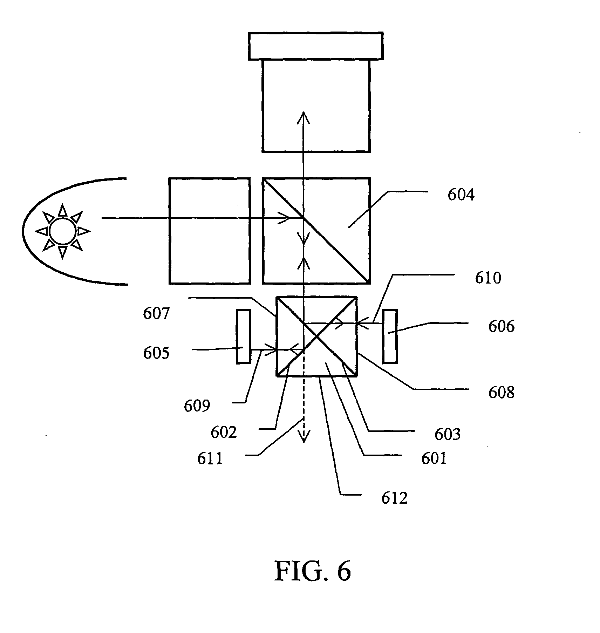

FIG. 6 illustrates a fifth preferred embodiment of the present invention, in which the dichroic beam splitting device is a X-cube prism **601,** which includes two dichroic surfaces **602, 603** for separating the incoming light from the PBS **604** into three light beams with complementary spectra and directing them to three different directions. Further spectral trimming can then be achieved by disposing the first **605** and second 606 display panel adjacent to the two exit surfaces **607, 608** of the X-cube prism **601** for receiving the two light beams **609, 610,** respectively and the remaining light beam **611** with a spectrum undesired is allowed to exit the projection system through the exit surface **612** without entering the projected image.

A sixth preferred embodiment (not shown) of the present invention, is similar to the first preferred embodiment but with the following modifications. The light source **201** is considered as comprising four primary color component light: C1, C2, C3 and C4. The two-color selection device **202** is designed that one time-sequential or color-scrolling portion of color light selected by the device includes C1 and C3 while the other portion of color light selected includes C2 and C4. The dichroic filtering device **204** is so designed that the first light beam **213** separated by it includes a time-sequential or color-scrolling C1/C2 light while the second light beam **214** separated includes a time-sequential or color-scrolling C3/C4 light. The two display panels **205, 206** are designed that they are able to display images of the corresponding primary colors. With these modifications, this preferred embodiment now describes a four primary color projection system. By the same principle, a five or six primary color projection system can also be achieved by using a three-color selection device as to maximize the color gamut.

In the present invention, no matter what type of polarizing beam splitter or dichroic filtering device is used, those undesired lights due to transmission of S-polarized light and reflection of P-polarized light by a polarizing beam splitter are prevented from entering the projection lens in order not to reduce the image contrast of a projection system with two reflective display panels.

A projection system with two reflective liquid crystal display panels can be provided such that the contrast ratio of the system and the color gamut of the projected image are optimum.

While the present invention has been described in the context of preferred embodiments, it should be apparent to those skilled to the art that the descriptions and teachings are illustrative and not to limit the scope of the claims. The present invention will suggest many alternatives and variations.

## Claims

1. A projection system, comprising a dichroic filtering device, optically between a polarizing beam splitter adapted to split light from a light source into light beams of desired polarization, and a plurality of reflective display devices adapted to receive a respective light beam from the dichroic filtering device and direct it back thereto to provide a combined light beam which is re-incident on the polarizing beam splitter whereby to seek to obviate undesired polarized light being projected.

2. A system according to claim 1, comprising a light source which provides a light with a spectrum divisible into a plurality of spectral component light; a multiple-color selection device adapted to accept light from said light source and provide a polarized light which is time-sequentially separated into a plurality of portions of light with different spectra propagating in the same optical path wherein each portion includes at least one of the said spectral component light; the polarizing beam splitter being disposed adjacent to said multiple-color selection device adapted to receive a uniquely polarized light from said multiple-color selection device; the dichroic filtering device being disposed adjacent to said polarizing beam splitter adapted to separate the light from said polarizing beam splitter into at least two light beams, including a first and a second light beam, propagating in different optical paths with different spectra; a first reflective display device adapted to receive said first light beam from said dichroic filtering device and direct it back to said dichroic filtering device; a second reflective display device adapted to receive said second light beam from said dichroic filtering device and direct it back to said dichroic filtering device; and a projection lens disposed adjacent to said polarizing beam splitter adapted to receive light from said polarizing beam splitter for image projection.

3. A system according to claim 2, the first and second reflective display devices each comprising a display panel.

4. A system according to claim 3, wherein the first display panel is a reflective liquid crystal display panel.

5. A system according to claim 3 or claim 4, wherein the second display panel is a reflective liquid crystal display panel.

6. A system according to any of claims 2 to 5, comprising a pre-polarizer within said light source or said multiple-color selection device adapted to provide a predetermined polarization of light.

7. A system according to any of claims 2 to 6, wherein the multiple-color selection device comprises a color wheel or an electrically controlled shutter type sequential-color filter that provides a plurality of time-sequential portions of light such that each portion includes at least one of the said spectral component light.

8. A system according to any of claims 2 to 7, comprising a polarizer disposed between said polarizing beam splitter and said projection lens.

9. A system according to any of claims 2 to 8, wherein the polarizing beam splitter receives a uniquely polarized light from said multiple-color selection device and directs it to said dichroic filtering device.

10. A system according to any of claims 2 to 9, wherein the dichroic filtering device combines
said first light beam from said first display panel and said second light beam from said second display panel and redirects the combined light beam to said polarizing beam splitter.

11. A system according to any of claims 2 to 10, wherein the polarizing beam splitter receives only two beams of light.

12. A system according to claim 1, comprising: a light source which provides a light with a spectrum divisible into a plurality of spectral component light; a multiple-color selection device adapted to provide a polarized light which is separated into a plurality scrolling portions of light with different spectra propagating at the same direction wherein each portion includes at least one of the said spectral component light, the polarizing beam splitter being disposed adjacent to said multiple-color selection device adapted to receive a uniquely polarized light from said multiple-color selection device, the dichroic filtering device being disposed adjacent to said polarizing beam splitter adapted to separate the light from said polarizing beam splitter into at least two light beams, including a first and a second light beam, propagating different optical paths with different spectra, a first reflective display device adapted to receive said first light beam from said dichroic filtering device and direct it back to said dichroic filtering device, a second reflective display device adapted to receive said second light beam from said dichroic filtering device and direct it back to said dichroic filtering device, and a projection lens disposed adjacent to said polarizing beam splitter adapted to receive light from said polarizing beam splitter for image projection.

13. A system according to claim 12, the first and second reflective display devices each comprising a display panel.

14. A system according to claim 13, wherein the first display panel is a reflective liquid crystal display panel.

15. A system according to claim 13 or claim 14, wherein the second display panel is a reflective liquid crystal display panel.

16. A system according to any of claims 12 to 15, comprising a pre-polarizer within said light source or said multiple-color selection device adapted to provide a predetermined polarization of light.

17. A system according to any of claims 12 to 16, wherein the multiple-color selection device comprises a scrolling-color system that provides a plurality of scrolling portions of light imaged at the display area of said display panels such that each portion includes at least one of the said spectral component light.

18. A system according to any of claims 12 to 17, comprising a polarizer disposed between said polarizing beam splitter and said projection lens.

19. A system according to any of claims 12 to 18, wherein the polarizing beam splitter receives a uniquely polarized light from said multiple-color selection device and directs it to said dichroic filter device.

20. A system according to any of claims 12 to 19, wherein the dichroic filtering device combines said first light beam from said first reflective display panel and said second light beam from said second reflective display panel and redirects the combined light beam to said polarizing beam splitter.

21. A system according to any of claims 12 to 20, wherein the polarizing beam splitter receives only two beams of light.

22. A system according to any preceding claim, wherein the dichroic filtering device includes at least one dichroic surface.

23. A system according to any one of claims 1 to 22, wherein the dichroic filtering device includes at least two dichroic surfaces for separating an incident light into three light beams of different spectra.

24. A two panel system, substantially as hereinbefore described, with reference to Figs. 2 to 6 of the accompanying drawings.
